# EUROPÄISCHE PATENTSCHRIFT

(11) **EP 0 684 060 B1**
(45) Veröffentlichungstag und Bekanntmachung des Hinweises auf die Patenterteilung: **08.12.1999**
(21) Anmeldenummer: 95107463.2
(22) Anmeldetag: 17.05.1995
(51) Int. Cl.: B01D 3/20

(54) **Verfahren und Vorrichtung zur destillativen Trennung von Stoffgemischen**
Process and apparatus for separating by destillation of mixtures of matérials
Procédé et dispositif de séparation par destillation de mélanges de matières

(30) Priorität: 27.05.1994 DE 4418488
(43) Veröffentlichungstag der Anmeldung: 29.11.1995
(73) Patentinhaber: BASF Aktiengesellschaft, 67063 Ludwigshafen (DE)
(72) Erfinder: Kaibel, Gerd, Dr., D-68623 Lampertheim (DE)

(56) Entgegenhaltungen:
- EP-A- 0 133 510
- EP-A- 0 598 382
- DE-B- 1 028 093
- US-A- 2 639 130
- US-A- 3 099 697

## Beschreibung

Die Erfindung betrifft ein Verfahren zur destillativen Trennung von Stoffgemischen in die reinen Bestandteile mittels einer Destillationskolonne, die ganz oder teilweise Packungen aus geordneten oder ungeordneten Trennelementen enthält, bei dem zwischen einem Verdampfer und einem Kondensator der Kolonne aufsteigender Dampf und abwärtsströmende Flüssigkeit in innige Berührung gebracht werden und durch den dabei stattfindenden Stoffaustausch die leichter siedenden Bestandteile im Kondensator und die hoher siedenden Bestandteile in der Kolonnenblase erhalten werden. Ferner betrifft die Erfindung eine Vorrichtung zur Durchführung des Verfahrens, bestehend aus einer Destillationskolonne mit Flüssigkeitssammlern und Wiederverteileinrichtungen.

Packungskolonnen finden in der destillativen Trenntechnik vielfältige Anwendungen. Als Trenneinbauten werden neben regellosen Schüttungen, z.B. aus Raschigringen, Pallringen, Keramiksätteln, auch geordnete Packungen eingesetzt. Diese können beispielsweise aus perforierten Metallblechen, aus Metallgeweben oder auch aus Kunststoff oder keramischem Material gefertigt sein. Gegenüber Bodenkolonnen bieten gepackte Kolonnen insbesondere Vorteile hinsichtlich des Druckverlustes, der geringen thermischen Beanspruchung empfindlicher Stoffe sowie häufig auch der Investitionskosten. Der Einsatzbereich erstreckt sich sowohl auf Fälle, bei denen nur eine geringe Reinheit der abzutrennenden Fraktionen erforderlich ist, als auch auf Anwendungen mit hohen Reinheitsanforderungen. Speziell in Anwendungsfällen, bei denen sehr hohe Reinheitsanforderungen zu erfüllen sind, stößt der Einsatz von gepackten Kolonnen in der industriellen Praxis noch auf Widerstand, da die geforderten Reinheiten mit gepackten Kolonnen im Produktionsmaßstab vielfach nicht erreicht werden konnten, so daß man wieder auf den Ein satz von Bodenkolonnen übergehen mußte.

Eine Überdimensionierung, d.h. eine Vergrößerung der Packungshöhe brachte in diesen Fällen keinen ausreichenden Erfolg und ist aus Kostengründen ohnehin unerwünscht. Daher wird als gebräuchliche Abhilfe von den Packungsherstellern eine mehrfache Sammlung der Flüssigkeit und ihre Wiederverteilung über Zwischenverteiler empfohlen. Dies ist bisher die aussichtsreichste Möglichkeit zur sicheren Erzielung hoher Produktreinheiten in gepackten Kolonnen. Nachteilig sind bei Verwendung von Flüssigkeitssammlern und Verteilern jedoch ihre Kosten und die vergrößerte Bauhöhe. Je Zwischenverteilung muß abhängig vom Verteilertyp und dem Kolonnendurchmesser mit einer zusätzlichen Bauhöhe von 1 bis 2,5 m gerechnet werden.

In US-A 3,099,697 ist eine Vorrichtung beschrieben, bei der man durch Einbauten versucht, die Flüssigkeitsbelastung gleichmäßig zu halten. Die EP-A 0598382 beschreibt ein Destillationsverfahren, bei welchem der Rundgängigkeit durch Beheizen der Kolonnenwand begegnet wird.

Vorliegender Erfindung liegt dementsprechend die Aufgabe zugrunde, ein Verfahren und eine Vorrichtung zur destillativen Trennung von Stoffgemischen zu entwickeln, mit denen auch bei Einsatz von Destillationskolonnen mit Füllkörpern und Packungen eine hohe Reinheit der von einem Stoffgemisch abzutrennenden Bestandteil erreicht werden kann.

Die Lösung der Aufgabe besteht in einem Verfahren der eingangs geschilderten Art, bei dem gemäß der Erfindung in der Destillationskolonne eine gezielte Ungleichverteilung der Flüssigkeitsberieselungsdichte über den Kolonnenquerschnitt eingestellt wird, wobei man in den Abtriebsteilen der Kolonne in den Wandbereichen eine verringerte Flüssigkeitsbelastung und in den Verstärkungsteilen in den Wandbereichen eine erhöhte Flüssigkeitsbelastung einstellt. Die auf den vorrichtungsmäßigen Teil der Aufgabe sich beziehende Lösung besteht darin, daß entsprechend der gewünschten Flüssigkeitsberieselungsdichte im Kernbereich sowie im Wandbereich der Kolonne die Anordnung der Abflußöffnungen und/oder deren Durchmesser gezielt dimensioniert werden.

Weitere Einzelheiten und Vorteile des Verfahrens und der Vorrichtung nach der Erfindung sind anhand eines in der Zeichnung schematisch dargestellten Ausführungsbeispiels nachfolgend beschrieben.

Es zeigen:
- Figur 1: den schematischen Aufbau einer Destillationskolonne
- Figur 2: den schematischen Aufbau einer Destillationskolonne mit einer Trennwand
- Figur 3: Flüssigkeitssammler und Wiederverteileinrichtung in einer Kolonne.

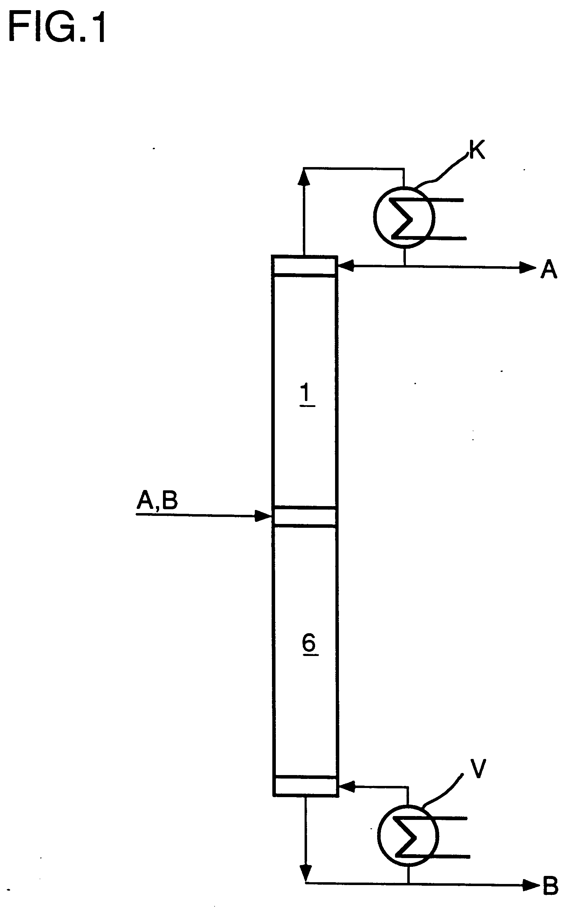

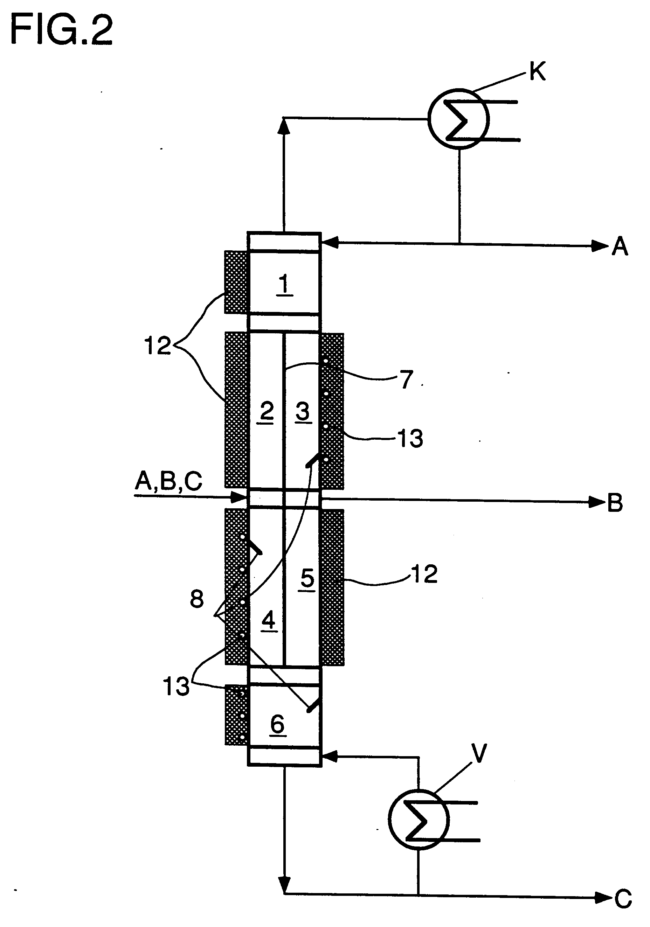

Bei der Trennung von Stoffgemischen in einer Destillationskolonne (Figur 1) werden üblicherweise zwischen einem Verdampfer V im Kolonnensumpf oder -blase und einem Kondensator K im Kolonnenkopf aufsteigender Dampf und abwärtsströmende Flüssigkeit in innige Berührung gebracht. Bei dem dabei stattfindenden Stoffaustausch reichern sich die leichter siedenden Bestandteile im Dampf und die schwerer siedenden Bestandteile in der Flüssigkeit an. Erstere A werden über Kopf abgezogen, letztere Bestandteile B bzw. C bleiben in der Blase der Kolonne zurück. Die Güte der Trennwirkung hängt von der Gleichmäßigkeit der Verteilung von Dampf und Flüssigkeit über den gesamten Querschnitt des Kolonneninnenraums längs des Strömungsweges und der Intensität deren Durchmischung ab. Bekannterweise stellt sich aber eine verstärkte Strömung von Flüssigkeit und Dampf im Bereich der Kolonnenwand und gegebenenfalls an Trennwänden 7 (Figur 2), die sog. Randgängigkeit, ein, da die Randschicht der Füllkörperschüttung bzw. Packung einen geringeren Widerstand bietet. In diesen Bereichen nimmt die Flüssigkeit daher nur unzureichend am Stoffaustausch teil.

Vorliegende Erfindung schafft hier Abhilfe, indem in diesen Bereichen im Abtriebsteil 3, 4, 6 der Kolonne, unterhalb des Stoffgemischzulaufs also, gezielt eine niedrigere Flüssigkeitsstromdichte gegenüber den übrigen Bereichen eingestellt wird, beispielsweise 10 bis 100 %, vorzugsweise 20 bis 50 %. Im Verstärkungsteil 1, 2, 5 der Kolonne hingegen wird die Flüssigkeitsstromdichte erhöht, beispielsweise 10 bis 1000 %, vorzugsweise 20 bis 50 %.

Bei Verwendung von Trennwandkolonnen erfolgt im Bereich der Trennwand 7 in ihrer Gesamtlänge oder in Teilbereichen eine abweichende Flüssigkeitsbeaufschlagung, wobei im Zulaufteil 2 oberhalb der Zulaufstelle und im Entnahmeteil 5 unterhalb der Seitenentnahmestelle einer erhöhte Flüssigkeitsbeaufschlagung und im Zulaufteil 4 unterhalb der Zulaufstelle und im Entnahmeteil 3 oberhalb der Seitenentnahmestelle eine erniedrigte Flüssigkeitsbeaufschlagung eingestellt wird.

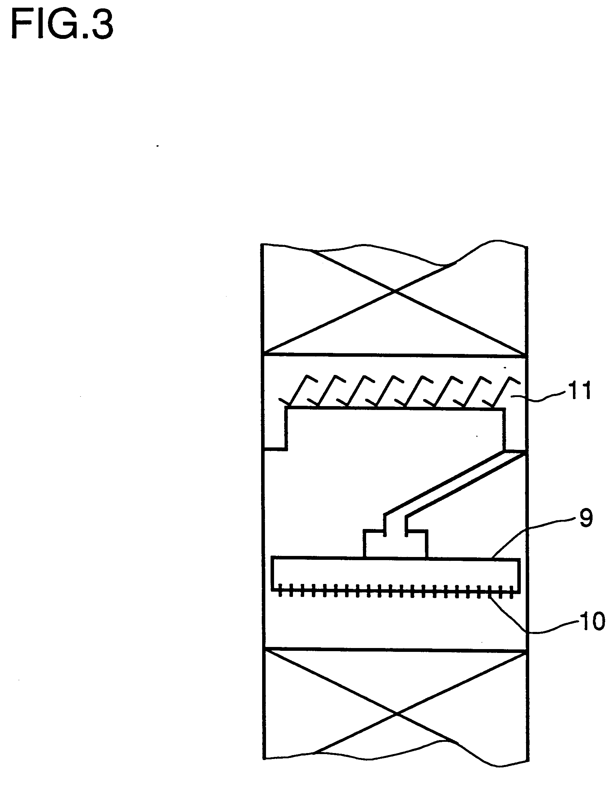

Diese gezielte Ungleichverteilung der Flüssigkeit kann mittels Verteileinrichtungen 9 (Figur 3) für die Flüssigkeit verschiedener Bauarten erhalten werden, indem z.B. die Zahl und Anordnung der Abflußöffnungen 10 und/oder deren Durchmesser entsprechend konstruktiv ausgelegt werden. Verteiler für die Flüssigkeit sind zumindest am oberen Ende der Kolonne und an der Zulaufstelle vorhanden. Für den Fall, daß zusätzliche Zwischenverteiler mit vorgeschaltetem Flüssigkeitssammler 11 eingesetzt werden, ist es vorteilhaft, diese ebenfalls mit einer entsprechenden Ungleichverteilung für die Flüssigkeit zu versehen.

Die Ungleichverteilung der Flüssigkeit kann auch durch konstruktive Maßnahmen an der Kolonnenwand und gegebenenfalls an Trennwänden erreicht werden, beispielsweise durch Ableitbleche 8 für die Flüssigkeit in Höhenabständen von 0,1 bis 2 m, vorzugsweise von 0,3 bis 1 m im Abtriebsteil der Kolonne. Bei ungeordneten Füllkörperschüttungen sollte das Ableitblech von der Wand aus etwa das 0,5 bis 3-fache, vorzugsweise das 1 bis 1,5-fache der Füllkörperabmessungen in den Kolonnenraum ragen.

Eine weitere Möglichkeit, die gezielte Ungleichverteilung der Flüssigkeitsberieselungsdichte einzustellen, kann darin bestehen, daß im Verstärkungsteil 1, 2, 5 der Kolonne bei Betriebstemperaturen, die oberhalb der Umgebungstemperatur liegen, die Dicke und Lage der Isolierschicht 12 des Kolonnenmantels je nach der Temperaturdifferenz zwischen Kolonne und Umgebung so gewählt wird, daß die gewünschte flächenbezogene Flüssigkeitsmehrbelastung im Randbereich erreicht wird.

Im Abtriebsteil 3, 4, 6 der Kolonne kann die Flüssigkeitsberieselungsdichte im Wandbereich durch Verdampfung mittels einer Schutzbeheizung 13 an der Kolonnenwand verringert werden.

## Patentansprüche

1. Verfahren zur destillativen Trennung von Stoffgemischen in die reinen Bestandteile mittels einer Destillationskolonne, die ganz oder teilweise Packungen aus geordneten oder ungeordneten Trennelementen enthält, bei dem zwischen einem Verdampfer und einem Kondensator der Kolonne aufsteigender Dampf und abwärtsströmende Flüssigkeit in innige Berührung gebracht werden und durch den dabei stattfindenden Stoffaustausch die leichter siedenden Bestandteile im Kondensator und die höher siedenden Bestandteile in der Kolonnenblase erhalten werden, dadurch gekennzeichnet, daß in der Destillationskolonne eine gezielte Ungleichverteilung der Flüssigkeitsberieselungsdichte über den Kolonnenquerschnitt eingestellt wird, wobei man in den Abtriebsteilen der Kolonne in den Wandbereichen eine verringerte Flüssigkeitsbelastung und in den Verstärkungsteilen in den Wandbereichen eine erhöhte Flüssigkeitsbelastung einstellt.

2. Verfahren nach Anspruch 1, dadurch gekennzeichnet, daß die Einstellung der Flüssigkeitsstromdichte im Bereich der Wand der Kolonne und einer gegebenenfalls vorhandenen Trennwand vorgenommen wird.

3. Verfahren nach den Ansprüchen 1 bis 2, dadurch gekennzeichnet, daß bei Verwendung von Trennwandkolonnen im Bereich der Trennwand in ihrer Gesamtlänge oder in Teilbereichen in den Wandbereichen eine abweichende Flüssigkeitsbeaufschlagung erfolgt, wobei im Zulauf teil oberhalb der Zulaufstelle und im Entnahmeteil unterhalb der Seitenentnahmestelle eine erhöhte Flüssigkeitsbeaufschlagung und im Zulaufteil unterhalb der Zulaufstelle und im Entnahmeteil oberhalb der Seitenentnahmestelle eine erniedrigte Flüssigkeitsbeaufschlagung eingestellt wird.

4. Verfahren nach Anspruch 1 bis 3, dadurch gekennzeichnet, daß die querschnittsbezogene Flüssigkeitsstromdichte in den Teilbereichen mit verringerter Einstellung um 10 bis 100 %, vorzugsweise 20 bis 50 %, gegenüber dem übrigen Bereich vermindert wird und in den Teilbereichen mit erhöhter Einstellung um 10 bis 1000 %, vorzugsweise um 20 bis 50 %, gegenüber dem übrigen Bereich vergrößert wird.

5. Vorrichtung zur Durchführung des Verfahren nach den Ansprüchen 1 bis 4, bestehend aus einer Destillationskolonne mit Flüssigkeitssammlern (11) und Wiederverteileinrichtungen (9), mit entsprechend der gewünschten Flüssigkeitsberieselungsdichte im Kernbereich sowie im Wandbereich der Kolonne gezielt dimensionierten Anordnung der Abflußöffnungen (10) und/oder deren Durchmesser.

6. Vorrichtung nach Anspruch 5, dadurch gekennzeichnet, daß bei Verwendung von regellosen Füllkörperschüttungen in Kolonnenbereichen, bei denen in den Wandbereichen im Antriebsteil eine verringerte Flüssigkeitsbeaufschlagung angestrebt wird, in Höhenabständen von 0,1 bis 2 m, bevorzugt 0,3 bis 1 m, Abstreifelemente (8) an den Wandungen angebracht sind, die 0,5 bis 3, bevorzugt 1 bis 1,5 Füllkörperschüttung hineinreichen und die Flüssigkeit aus dem Wandbereich in die Packung ableiten.

7. Vorrichtung nach Anspruch 5, dadurch gekennzeichnet, daß bei Kolonnen,deren Temperatur im Verstärkungsteil (1, 2, 5) oberhalb der Umgebungstemperatur liegt, die Dicke und Lage der Isolierschicht (12) auf dem Kolonnenmantel so ausgelegt ist, daß die gewünschte erhöhte flächenbezogene Flüssigkeitsberieselungsdichte im Randbereich der Kolonne erreicht wird.

8. Vorrichtung nach Anspruch 5 und 6, mit einer Schutzbeheizung (13) an der Kolonnenwand im Abtriebsteil (3, 4, 6) der Kolonne zur Verringerung der Flüssigkeitsberieselungsdichte im Wandbereich durch Verdampfung.

## Claims

1. A process for the distillative separation of mixtures into the pure components by means of a distillation column which is completely or partly filled with packings comprising stacked or dumped separating elements, in which ascending vapor and downward-flowing liquid are brought into intimate contact between an evaporator and a condenser of the column and, as a result of the mass transfer which occurs, the lower-boiling components are obtained in the condenser and the higher-boiling components in the bottom of the column, wherein a specific nonuniform distribution of the liquid trickling density over the column cross-section is established in the distillation column, a reduced liquid flow rate being established in the wall regions in the stripping sections of the column and an increased liquid flow rate being established in the wall regions in the rectifying sections.

2. A process as claimed in claim 1, wherein the liquid flow density is adjusted in the region of the wall of the column and of any partition present.

3. A process as claimed in either of claims 1 and 2, wherein, when partitioned columns are used, a different liquid flow rate occurs in the region of the partition, along its entire length or in parts in the wall regions, an increased liquid flow rate being established above the feed point in the feed section and below the side take-off point in the take-off section and a reduced liquid flow rate being established below the feed point in the feed section and above the side take-off point in the take-off section.

4. A process as claimed in any of claims 1 to 3, wherein the cross-sectional liquid flow density is reduced in the sections with a lower setting by from 10 to 100%, preferably from 20 to 50%, compared with the other region, and is increased in the sections with a higher setting by from 10 to 1000%, preferably from 20 to 50%, compared with the other region.

5. Apparatus for carrying out the process as claimed in any of claims 1 to 4, consisting of a distillation column having liquid collectors (11) and redistribution means (9), having an arrangement of the outlet orifices (10) or their diameter which is specifically dimensioned in accordance with the desired liquid trickling density in the core region and in the wall region of the column.

6. Apparatus as claimed in claim 5, wherein, when irregular packings are used in column regions in which a reduced liquid flow rate is desirable in the wall regions in the stripping section, stripping elements (8) which project into the packing by from 0.5 to 3, preferably from 1 to 1.5, packing dimensions and deflect the liquid from the wall region into the packing are mounted on the walls at height intervals of from 0.1 to 2 m, preferably from 0.3 to 1 m.

7. Apparatus as claimed in claim 5, wherein, in the case of columns whose temperature in the rectifying section (1, 2, 5) is above the ambient temperature, the thickness and position of the insulating layer (12) on the column jacket is chosen so that the desired increased area-related liquid trickling density is achieved in the edge region of the column.

8. Apparatus as claimed in claims 5 and 6, having a protective heater (13) at the column wall in the stripping section (3, 4, 6) of the column for reducing the liquid trickling density in the wall region by evaporation.

## Revendications

1. Procédé pour séparer des mélanges de substances en les constituants purs par distillation à l'aide d'une colonne à distiller contenant des garnissages totaux ou partiels d'éléments séparateurs ordonnés ou non et dans laquelle les vapeurs ascendantes et le liquide s'écoulant vers le bas entrent en contact intime entre un vaporiseur et un condenseur de la colonne et, en raison de l'échange de substances qui se produit ainsi, les constituants volatils sont recueillis dans le condenseur et les constituants lourds dans l'alambic de colonne, caractérisé par le fait que l'on règle intentionnellement dans la colonne à distiller une répartition irrégulière de la densité de ruissellement du liquide sur la section de colonne, avec une charge amoindrie en liquide dans les régions de paroi dans les parties entrainement de la colonne et une charge accrue en liquide dans les régions de paroi dans les parties concentration.

2. Procédé selon la revendication 1, caractérisé par le fait que l'on règle la densité du courant de liquide dans la région de paroi de la colonne et d'une paroi séparatrice éventuellement présente.

3. Procédé selon les revendications 1 à 2, caractérisé par le fait que, lorsqu'on utilise des colonnes à paroi séparatrice, dans la région de la paroi séparatrice, sur toute sa longueur ou dans des zones partielles, dans les régions de paroi, il y a une charge variable en liquide, que l'on règle à une charge accrue en liquide dans la partie alimentation au-dessus de l'endroit d'alimentation et dans la partie prélèvement au-dessous de l'endroit de prélèvement latéral et à une charge amoindrie en liquide dans la partie alimentation au-dessous de l'endroit d'alimentation et dans la partie prélèvement au-dessus de l'endroit de prélèvement latéral.

4. Procédé selon les revendications 1 à 3, caractérisé par le fait que la densité du courant de liquide, rapportée à la section, dans les régions partielles à réglage diminué, est diminuée de 10 à 100%, de préférence de 20 à 50%, par rapport à la région restante, et accrue de 10 à 1000%, de préférence de 20 à 50%, par rapport à la région restante, dans les zones partielles à réglage accru.

5. Appareillage pour la mise en oeuvre du procédé selon les revendications 1 à 4, consistant en une colonne à distiller avec collecteurs de liquide (11) et dispositifs de nouvelle répartition (9), et une disposition des orifices d'écoulement (10) et/ou de leur diamètre conçue intentionnellement en fonction de la densité de ruissellement de liquide voulue dans la région centrale et dans les régions de paroi de la colonne.

6. Appareillage selon la revendication 5, caractérisé par le fait que, lorsqu'il y a des garnissages de corps non ordonnés dans les régions de la colonne dans lesquelles, dans les régions de la paroi, on recherche une charge amoindrie de liquide dans la partie entraînement, il y a sur les parois, à des distances en hauteur de 0,1 à 2 m, de préférence de 0,3 à 1 m, des éléments déflecteurs (8), qui pénètrent 0,5 à 3, de préférence 1 à 1,5, garnissages de corps et dévient le liquide de la région de paroi dans le garnissage.

7. Appareillage selon la revendication 5, caractérisé par le fait que, dans le cas de colonnes dont la température dans la partie concentration (1, 2, 5) est supérieure à la temprature environnante, l'épaisseur et la position de la couche isolante (12) sur l'enveloppe de colonne est conçue en sorte de parvenir, dans la région de bordure de la colonne, à la densité de ruissellement de liquide accrue recherchée par rapport à la surface.

8. Appareillage selon les revendications 5 et 6, avec un chauffage protecteur (13) sur la paroi de colonne dans la partie entraînement (3, 4, 6) de la colonne, en vue d'amoindrir la densité de ruissellement de liquide dans la région de paroi par évaporation.
